# EUROPÄISCHE PATENTSCHRIFT

(11) **EP 1 771 320 B1**
(45) Veröffentlichungstag und Bekanntmachung des Hinweises auf die Patenterteilung: **30.04.2014**
(21) Anmeldenummer: 05756085.6
(22) Anmeldetag: 01.07.2005
(51) Int. Cl.: B60R 21/013, B60R 21/0132

(54) **KRAFTFAHRZEUG MIT EINEM PRÄVENTIV WIRKENDEN SICHERHEITSSYSTEM**
MOTOR VEHICLE PROVIDED WITH A PREVENTATIVELY ACTING SECURITY SYSTEM
VEHICULE AUTOMOBILE EQUIPE D'UN SYSTEME DE SECURITE AGISSANT A TITRE PREVENTIF

(30) Priorität: 08.07.2004 DE 102004032985
(43) Veröffentlichungstag der Anmeldung: 11.04.2007
(73) Patentinhaber: Daimler AG, 70327 Stuttgart (DE)
(72) Erfinder: BERNZEN, Werner, 71139 Ehningen (DE); REUTTER, Dominic, 73102 Birenbach (DE); WAGNER, Alfred, 72810 Gomaringen (DE)
(74) Vertreter: JENSEN & SON
(86) Internationale Anmeldenummer: PCT/EP2005/007110
(87) Internationale Veröffentlichungsnummer: WO 2006/005453

(56) Entgegenhaltungen:
- EP-A- 1 247 699
- WO-A-2004/069603
- WO-A-2004/094195
- DE-A1- 10 146 725
- DE-A1- 10 246 917
- DE-A1- 19 729 960
- DE-A1- 19 811 865
- DE-B3- 10 250 732
- DE-C1- 10 121 386

## Beschreibung

Die Erfindung betrifft ein Kraftfahrzeug mit einem präventiv wirkenden Sicherheitssystem nach der im Oberbegriff des Patentanspruches 1 näher definierten Art.

Es ist aus der Praxis bekannt, Kraftfahrzeuge, insbesondere Personenkraftwagen, mit aktiven und passiven Sicherheitseinrichtungen auszustatten, die es dem Fahrer ermöglichen, sein Fahrzeug auch in kritischen Situationen besser zu beherrschen und dadurch gegebenenfalls eine Verunfallung des Fahrzeugs zu vermeiden. Auch tragen derartige Sicherheitseinrichtungen im Falle einer Kollision zu einer Verminderung der Unfallschwere bei.

Sicherheitssysteme, die bereits vor einer möglichen Kollision präventiv wirksam sind und eine so genannte Pre-Crash-Phase, d. h. einen Zeitraum ab Erkennen einer hohen Kollisionswahrscheinlichkeit durch entsprechende Detektionssysteme in dem Fahrzeug bis zum eigentlichen Aufprall, dazu nutzen, den Insassenschutz durch zusätzliche Sicherheitsmaßnahmen zu erweitern und so die Unfallschwere zu mindern, werden als präventiv wirkende Sicherheitssysteme bezeichnet. Solche Sicherheitssysteme nutzen zur Erkennung möglicher Unfallsituationen Informationen, die von verschiedenen Sensoreinrichtungen des Kraftfahrzeuges bereitgestellt werden. Die Sensoreinrichtungen sind insbesondere Bestandteil eines elektronischen Fahrstabilisierungsprogramms und/oder Bestandteil eines Abstandssensorsystems. In Abhängigkeit von der erkannten Situation werden dann Rückschlüsse auf einen möglichen Aufprall gezogen und entsprechende Maßnahmen zur Konditionierung des Fahrzeugs und von Rückhaltesystemen für Insassen auf die bevorstehende Verunfallung hin eingeleitet.

Aus der DE 101 21 386 C1 ist ein präventiv wirkendes Sicherheitssystem bekannt, bei dem mittels einer Sensorik Fahrzustandsdaten erfasst werden und das ein reversibles Insassenschutzsystem aufweist, welches vor einem Kollisionszeitpunkt aktiviert und dadurch in Wirkstellung gebracht werden kann. Ein solches Sicherheitssystem wird auch PRE-SAFE-System genannt (eingetragene Marke). Die Fahrzustandsdaten werden mittels einer Sensorik hinsichtlich einer etwaigen Notbremsung, eines etwaigen Übersteuerns und eines etwaigen Untersteuerns überwacht. Wenn eine Notbremsung, ein Übersteuern und/oder ein Untersteuern erkannt wird, erfolgt eine Aktivierung des Insassenschutzsystems, wobei das Insassenschutzsystem nur bei Überschreiten einer Mindestgeschwindigkeit ausgelöst werden kann. Die Sensorik zur Erfassung der Fahrzustandsdaten kann einen Lenkwinkelsensor, einen Pedalwegsensor, einen Bremsdrucksensor, einen Raddrehzahlsensor, einen Beschleunigungssensor und einen Gierratensensor umfassen.

Der kritische Grenzbereich wird subjektiv stark unterschiedlich empfunden, je nachdem, mit welcher Geschwindigkeit sich das Fahrzeug fortbewegt oder welche Beschleunigungen es erfährt. So wird bei niedrigen Geschwindigkeiten oder niedrigen Beschleunigungen ein Unter- oder Übersteuern eher toleriert als bei hohen Geschwindigkeiten oder Beschleunigungen in Längs- oder Querrichtung.

Das aus der DE 101 21 386 C1 bekannte Insassenschutzsystem wird jedoch stets bei dem gleichen Auslöseschwellenwert aktiviert und weist daher ein Auslöseverhalten auf, welches subjektiv bei niedrigen Fahrzeuggeschwindigkeiten oder Beschleunigungen als empfindlich und bei hohen Fahrzeuggeschwindigkeiten oder Beschleunigungen vergleichsweise unempfindlich empfunden wird.

Die DE 198 11 865 A1 offenbart ein Fahrzeug gemäß Oberbegriff des Anspruchs 1 und ein Verfahren zum Steuern des Betriebs von Kraftfahrzeug- Insassenschutzeinrichtungen, bei dem ein Fahrdynamik-Sicherheitssystem fahrdynamische Daten erfasst, die zumindest teilweise in einem Algorithmus zur Steuerung der Insassenschutzeinrichtung berücksichtigt werden. Beispielsweise kann ein Gurtstrammer, sobald ein Fahrdynamik-Sicherheitssystem in Tätigkeit tritt, prophylaktisch derart aktiviert werden, dass der Gurt beispielsweise elektromotorisch gestrafft wird.

Die DE 101 46 725 A1 betrifft ein Verfahren zur Feststellung, ob ein Rad eines Kraftfahrzeugs vom Boden abgehoben hat. Eine Kontrolleinrichtung für die Rollbewegung sowie eine Detektionseinrichtung für ein Abheben beruhen darauf, dass die Räder des Kraftfahrzeuges einen geringeren Lenkungsaufwand bzw. eine geringere Lenkkraft erfordern, wenn diese von der Straßenebene abgehoben sind. Wenn die Lenkkraft während der Perturbation geringer als ein Schwellwert für ein Radabheben ist, wird ein Abheben angezeigt. Die Schwelle für die Feststellung eines Radabhebens kann mit der Geschwindigkeit des Fahrzeuges variieren. Nach Feststellung eines Abhebens wird durch eine Modifikation des Lenkwinkels eine dem Abheben entgegenwirkende Kraft aufgebracht.

Die DE 197 29 960 A1 beschreibt ein Verfahren zur Aufprallerkennung, bei dem das Signal eines Precrash-Sensors, womit immer eine vorausschauende Sensorik, z.B. ein Radar gemeint ist, die Auslöseschwelle eines Insassenschutzsystems, welches durch einen Beschleunigungssensor ausgelöst wird, derart beeinflusst, dass die Schwellen herabgesetzt werden, wenn das Precrash-Signal einen drohenden Aufprall anzeigt. Es können zwei Precrash-Sensoren verwendet werden, von denen einer der rechten und einer der linken Fahrzeughälfte zugeordnet ist. Diese zwei Precrash-Sensoren werden zur Aktivierung der jeweiligen Seiten-Airbags genutzt, wobei die Auslöseschwellen für diese Seiten-Airbags in Abhängigkeit von dem Precrash-Sensorsignal deutlich herabgesetzt, zum Beispiel halbiert werden.

Der Erfindung liegt die Aufgabe zugrunde, ein Kraftfahrzeug mit einem präventiv wirkenden Sicherheitssystem der einleitend genannten Art zu schaffen, welches ein dem aktuellen Fahrzustand und dem subjektivem Empfinden für fahrkritische Situationen besser angepasstes Auslöseverhalten von Sicherheitseinrichtungen für Insassen bereitstellt.

Bei einem Kraftfahrzeug mit einem präventiv wirkenden Sicherheitssystem gemäß der im Oberbegriff des Patentanspruches 1 genannten Art wird diese Aufgabe erfindungsgemäß dadurch gelöst, dass eine Anpassung des Auslöseschwellenwertes für eine querdynamisch kritischen Fahrsituation in Abhängigkeit von einer Fahrzeuggesamtbeschleunigung und/oder einer Fahrzeuggeschwindigkeit erfolgt.

Durch die erfindungsgemäße Lösung ist vorteilhafterweise eine reibwertabhängige Anpassung des Auslöseverhaltens eines als präventiv wirkendes Sicherheitssystem ausgelegten Insassen- und/oder Partnerschutzsystems möglich, wobei insbesondere eine separate Applikation der Auslöseschwellen für hohe und für niedrige Reibwerte erreicht werden kann.

So kann durch die erfindungsgemäße Ausgestaltung eines präventiv wirkenden Sicherheitssystems bei einem hohen Reibwert eine Absenkung des einer querdynamisch kritischen Fahrsituation, wie z. B. einem Zustand Untersteuern oder einem Zustand

Übersteuern, zugeordneten Auslöseschwellenwerts erfolgen, was insbesondere bei hohen Fahrzeuggeschwindigkeiten im Vergleich zu einem herkömmlichen präventiv wirkenden Sicherheitssystem zu einer Erhöhung der Anzahl an Aktivierungen des führt und damit gegebenenfalls die Akzeptanz des präventiv wirkenden Sicherheitssystems bei einem Nutzer des Kraftfahrzeuges steigert.

Durch die erfindungsgemäße Ausführung des präventiv wirkenden Sicherheitssystems ist eine Abbildung des Gefährdungsempfindens des Fahrzeugnutzers möglich. Dieser fühlt sich in der Regel bei niedrigen Fahrzeuggeschwindigkeiten und geringen Reibwerten sicher, so dass der Auslöseschwellenwert einen höheren Wert annehmen kann. Bei hohen Fahrzeuggeschwindigkeiten und hohen Reibwerten ist das subjektive Gefährdungsempfinden in der Regel jedoch ausgeprägter, so dass dann der Auslöseschwellenwert vorteilhafterweise einen niedrigeren Wert annimmt.

Bei den beim Überschreiten des Auslöseschwellenwerts angesteuerten Sicherheitseinrichtungen kann es sich beispielsweise um ein Gurtstraffsystem, ein Airbagsystem, eine elektrische Sitzverstelleinrichtung, in ihrer Form, Größe und/oder Lage verstellbare Polster, oder andere elektrisch, hydraulisch oder pneumatisch im Hinblick auf eine Erhöhung der Sicherheit verstellbare Fahrzeugkomponenten handeln.

Die Fahrsituations-Erfassungseinrichtung kann eine vielfältig ausgelegte Sensorik umfassen, welche beispielsweise mit einem Lenkwinkelsensor, einem Pedalwegsensor, einem Bremsdrucksensor, einem Raddrehzahlsensor, einem Beschleunigungssensor, einem Gierratensensor und/oder einem Abstandssensor ausgestattet ist.

Die Datenauswerteeinrichtung des erfindungsgemäß ausgeführten präventiv wirkenden Sicherheitssystems kann eine Datenverarbeitungseinrichtung eines Fahrstabilisierungssystems des Kraftfahrzeuges sein, welches insbesondere in modernen Kraftfahrzeugen häufig ohnehin vorhanden ist. Alternativ kann natürlich auch eine separate Datenverarbeitungseinrichtung eingesetzt werden.

Zur Erkennung einer querdynamisch kritischen Fahrsituation, wie einem Untersteuern, bei welchem der Radius des durch den Lenkwinkel vorgegebenen Sollbahn kleiner als der Radius der tatsächlich durchfahrenen Bahn des Fahrzeugs ist, oder einem Übersteuern, bei welchem der Radius der durch den Lenkwinkel vorgegebenen Sollbahn größer als der Radius der tatsächlich durchfahrenen Bahn ist, wird zweckmäßigerweise die mittels entsprechender Beschleunigungssensoren und gegebenenfalls mittels eines Giersensors ermittelte Fahrzeuggesamtbeschleunigung analysiert, die sich aus der Summe der Fahrzeuglängsbeschleunigung und der Fahrzeugquerbeschleunigung ergibt. Ergibt die Analyse ein Überschreiten des reibwertabhängig variierenden Auslöseschwellenwerts, gibt die Datenauswerteeinrichtung eine Kollisionsplausibilität aus, so dass die mit dem präventiv wirkenden Sicherheitssystem zusammenwirkenden Sicherheitseinrichtungen entsprechend der möglichen Unfallsituation aktiviert und konditioniert werden.

Das erfindungsgemäß ausgeführte präventiv wirkenden Sicherheitssystem stellt vorzugsweise ein reversibles Insassenschutzsystem dar, das mehrmals von einem Ausgangszustand in einen Wirkzustand versetzt und aus dem Wirkzustand wieder in seinen Ausgangszustand zurückversetzt werden kann.

Bei einer bevorzugten Ausführungsform des Kraftfahrzeugs nach der Erfindung erfolgt die dynamische Anpassung des Auslöseschwellenwerts wenigstens im Wesentlichen kontinuierlich, d.h. stufenlos. Damit ist eine reibwertabhängige Anpassung des Auslöseschwellenwerts über dem gesamten Geschwindigkeitsbereich des Kraftfahrzeuges möglich.

Ausgehend von einem Schwellenwert bei einer niedrigen Fahrzeuggeschwindigkeit und einer niedrigen Fahrzeuggesamtbeschleunigung, d. h. bei einem niedrigen Reibwert, ist es zweckmäßig, dass der Auslöseschwellenwert mit zunehmender Fahrzeuggeschwindigkeit und/oder zunehmender Fahrzeuggesamtbeschleunigung um wenigstens annähernd bis zu 50 % reduziert wird. Damit ist sichergestellt, dass stets ein fahrsituationsangepasstes Ansprechverhalten des präventiv wirkenden Sicherheitssystems vorliegt.

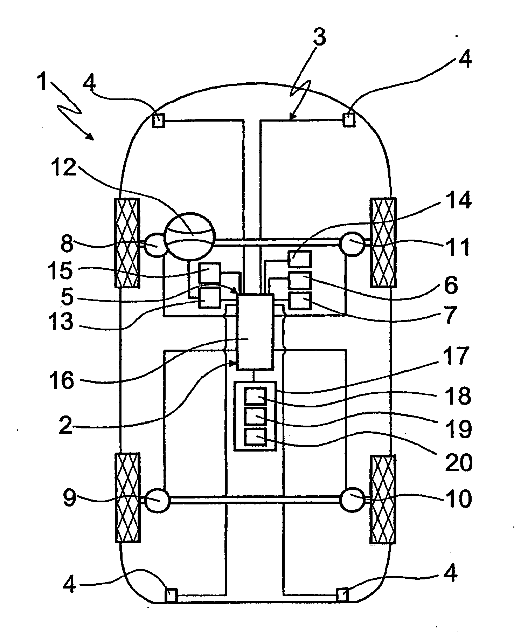

Weitere Vorteile und vorteilhafte Ausgestaltungen des Gegenstandes nach der Erfindung sind der Beschreibung, der Zeichnung und den Patentansprüchen entnehmbar.

In der einzigen Figur der Zeichnung ist prinzipmäßig ein Ausführungsbeispiel eines erfindungsgemäß ausgestalteten Kraftfahrzeuges dargestellt, welches in der nachfolgenden Beschreibung näher erläutert wird.

In der Zeichnung ist eine stark schematisierte Draufsicht eines Kraftfahrzeuges 1 dargestellt, das als Personenkraftwagen oder auch als Nutzkraftwagen ausgeführt sein kann und mit einem erfindungsgemäß ausgeführten präventiv wirkenden Sicherheitssystem 2 ausgestattet ist.

Das präventiv wirkenden Sicherheitssystem 2 weist eine Sicherheitssensorik 3 auf, die mit einer Fahrzeugumgebungs-Erkennungseinrichtung 4 und einer Fahrsituations-Erfassungseinrichtung 5 zusammenwirkt. Die Fahrsituations-Erfassungseinrichtung 5 ist wiederum mit einer Fahrzustandssensorik 6 versehen, die unter anderem zur Erkennung eines Übersteuerns und/oder eines Untersteuerns des Kraftfahrzeuges 1 dient. Zu diesen Zwecken werden unter anderem Informationen bzw. Daten genutzt, die von Raddrehzahlsensoren 8, 9, 10 und 11, von einem im Bereich eines Lenkrads 12 angeordneten Lenkwinkelsensor 13, von einem Längsbeschleunigungssensor 14 sowie einem Querbeschleunigungssensor 15 geliefert werden.

Die Fahrzustandssensorik 6 ist vorliegend auch einer Fahrdynamikfunktionalität 7, wie beispielsweise einem Antiblockiersystem und/oder einem elektronischen Stabilitätsprogramm, zugeordnet. Im Normalbetrieb des Kraftfahrzeuges kann die Fahrzustandssensorik 6 zu diesem Zwecken weitere wichtige fahrdynamiche Größen, wie beispielsweise eine Fahrzeuggeschwindigkeit, eine Gierrate, einen Ein- und Ausfederweg, das Fahrzeugniveau, eine Gaspedalbewegung, eine Gaspedalstellung, eine Bremspedalstellung, eine Bremspedalbewegung, eine Lenkradgeschwindigkeit und/oder eine Lenkradbeschleunigung analysieren. Dabei werden Ist-Werte dieser Größen mit vorgegeben Soll-Werten und Schwell-Werten verglichen. Aufgrund dieser Vergleiche werden beispielsweise das Antiblockiersystem und/oder das elektronische Stabilitätsprogramm aktiviert, welche die Aufgabe haben, den Fahrer des Kraftfahrzeuges in fahrkritischen Situationen zur Vermeidung eines Unfalls zu unterstützen.

Die von den Sensoren 14 und 15 ermittelten Längs- und Querbeschleunigungen sowie die jeweilige mittels der Raddrehzahlsensoren 8 bis 11 ermittelte Fahrzeuggeschwindigkeit werden zur Nutzung bzw. Aktivierung des präventiv wirkenden Sicherheitssystems 2 in einer Datenauswerteeinrichtung 16 derart ausgewertet, dass ein Vergleich mit einem Auslöseschwellenwert erfolgt, wobei wenigstens eine Auswahl an vorhandenen Sicherheitseinrichtungen 17 bei Überschreiten des Auslöseschwellenwerts aktiviert wird.

Die Sicherheitseinrichtungen 17 umfassen im vorliegenden Fall insbesondere eine Gurtstraffeinrichtung 18, Airbags 19 sowie eine Ansteuerung einer elektrischen Sitzverstelleinrichtung 20, wobei die Fahrzeugsitze bzw. deren Komponenten in Abhängigkeit von ihrer Belegung in eine Orientierung gebracht werden können, die bei einer etwaigen Verunfallung des Kraftfahrzeuges 1 dem betreffenden Fahrzeuginsassen die höchstmögliche Sicherheit liefert.

Der in der Datenauswerteeinrichtung 16 abgelegte Auslösalgorithmus ist so ausgelegt, dass eine Anpassung des Auslöseschwellenwerts des präventiv wirkenden Sicherheitssystems 2 bei einer als querdynamisch kritisch erkannten Fahrsituation in Abhängigkeit von einem jeweils herrschenden Reibwert, d. h. in Abhängigkeit von einer Fahrzeuggesamtbeschleunigung, die sich aus den mittels der Sensoren 14 und 15 gemessenen Längs- und Querbeschleuingungswerten zusammensetzt, und der jeweils gewählten Fahrzeuggeschwindigkeit erfolgt.

Die Anpassung des Auslöseschwellenwerts erfolgt dabei im Wesentlichen kontinuierlich, und zwar derart, dass er mit zunehmender Fahrzeuggeschwindigkeit und zunehmender Fahrzeuggesamtbeschleunigung um bis zu 50 % reduziert wird. Dies bedeutet, dass die Aktivierung des präventiv wirkenden Sicherheitssystems 2 bzw. der Sicherheitseinrichtungen 17 im Falle eines hohen Reibwerts schon bei einem niedrigeren Auslöseschwellenwert erfolgt.

## Patentansprüche

1. Kraftfahrzeug mit einem hinsichtlich einer drohenden Kollision präventiv wirkenden Sicherheitssystem (2), das Sicherheitseinrichtungen (17) umfasst, die in Abhängigkeit von Informationen angesteuert werden, die mittels einer Fahrzustandssensorik (6) von einer Fahrsituations-Erfassungs-einrichtung (5) aufgenommen und in einer Datenauswerteeinrichtung (16) ausgewertet werden, wobei die aufgenommenen Informationen mit einem Auslöseschwellenwert verglichen werden und eine Ansteuerung der Sicherheitseinrichtungen bei einem Überschreiten des Auslöseschwellenwerts erfolgt,
**dadurch gekennzeichnet,**
**dass** eine Anpassung des Auslöseschwellenwerts für eine querdynamisch kritischen Fahrsituation in Abhängigkeit von einer Fahrzeugbeschleunigung erfolgt.

2. Kraftfahrzeug nach Anspruch 1,
**dadurch gekennzeichnet,**
**dass** eine Anpassung des Auslöseschwellenwerts für eine querdynamisch kritischen Fahrsituation zusätzlich in Abhängigkeit von einer Fahrzeuggeschwindigkeit erfolgt.

3. Kraftfahrzeug nach Anspruch 2,
**dadurch gekennzeichnet,**
**dass** die Fahrzeugbeschleunigung eine Fahrzeuggesamtbe-schleunigung ist, welche sich aus mittels Sensoren (14, 15) gemessenen Längs- und Querbeschleunigungswerten zusammensetzt.

4. Kraftfahrzeug nach Anspruch 3,
**dadurch gekennzeichnet,**
**dass** bei niedrigen Fahrzeuggeschwindigkeiten und geringen Fahrzeuggesamtbeschleunigungen der Auslöseschwellwert einen höheren Wert annimmt als bei hohen Fahrzeuggeschwindigkeiten und hohen Fahrzeuggesamtbeschleunigungen.

5. Kraftfahrzeug nach einem der Ansprüche 1 bis 3,
**dadurch gekennzeichnet,**
**dass** die Anpassung des Auslöseschwellenwerts wenigstens im Wesentlichen kontinuierlich erfolgt.

6. Kraftfahrzeug nach Anspruch 5,
**dadurch gekennzeichnet,**
**dass** der Auslöseschwellenwert mit zunehmender Fahrzeuggeschwindigkeit und/oder zunehmender Fahrzeuggesamtbeschleunigung um bis zu 50 % reduziert wird.

7. Kraftfahrzeug mit einem hinsichtlich einer drohenden Kollision präventiv wirkenden Sicherheitssystem (2), das Sicherheitseinrichtungen (17) umfasst, die in Abhängigkeit von Informationen angesteuert werden, die mittels einer Fahrzustandssensorik (6) von einer Fahrsituations-Erfassungs-einrichtung (5) aufgenommen und in einer Datenauswerteeinrichtung (16) ausgewertet werden, wobei die aufgenommenen Informationen mit einem Auslöseschwellenwert verglichen werden und eine Ansteuerung der Sicherheitseinrichtungen bei einem Überschreiten des Auslöseschwellenwerts erfolgt,
**dadurch gekennzeichnet,**
**dass** der Auslöseschwellenwerts für eine querdynamisch kritischen Fahrsituation mit zunehmender Fahrzeuggeschwindigkeit um bis zu 50 % reduziert wird.

## Claims

1. Motor vehicle provided with a safety system (2) acting preventatively in the case of an imminent collision, which comprises safety devices (17) which are selected in response to information which is recorded by means of a driving state sensor system (6) by a driving situation detection device (5) and evaluated in a data evaluation device (16), wherein the recorded information is compared to a triggering threshold value and the safety devices are selected if the triggering threshold value is exceeded,
**characterised in that**
the triggering threshold value is adapted for a transversely dynamically critical driving situation as a function of a vehicle acceleration.

2. Motor vehicle according to claim 1,
**characterised in that**
the triggering threshold value is additionally adapted for a transversely dynamically critical driving situation as a function of a vehicle speed.

3. Motor vehicle according to claim 2,
**characterised in that**
the vehicle acceleration is a total vehicle acceleration composed of longitudinal and transverse acceleration values measured by means of sensors (14, 15).

4. Motor vehicle according to claim 3,
**characterised in that**
the triggering threshold value assumes a higher value at low vehicle speeds and low total vehicle accelerations than at high vehicle speeds and high total vehicle accelerations.

5. Motor vehicle according to any of claims 1 to 3,
**characterised in that**
the triggering threshold value is adapted at least substantially continuously.

6. Motor vehicle according to claim 5,
**characterised in that**
the triggering threshold value is reduced by up to 50% as the vehicle speed and/or the total vehicle acceleration increase(s).

7. Motor vehicle provided with a safety system (2) acting preventatively in the case of an imminent collision, which comprises safety devices (17) which are selected in response to information which is recorded by means of a driving state sensor system (6) by a driving situation detection device (5) and evaluated in a data evaluation device (16), wherein the recorded information is compared to a triggering threshold value and the safety devices are selected if the triggering threshold value is exceeded,
**characterised in that**
the triggering threshold value is reduced by up to 50% for a transversely dynamically critical driving situation as the vehicle speed increases.

## Revendications

1. Véhicule automobile équipé d'un système de sécurité (2) à action préventive de manière préventive par rapport à un risque de collision, qui comprend des dispositifs de sécurité (17), lesquels sont commandés en fonction d'informations qui sont enregistrées au moyen d'un capteur de condition de roulage (6) par un dispositif d'enregistrement de situation de circulation (5) et analysées dans un dispositif d'analyse de données (16), les informations enregistrées étant comparées à une valeur seuil de déclenchement et une commande des dispositifs de sécurité étant déclenchée lorsque la valeur seuil de déclenchement est dépassée, **caractérisé en ce qu'**
la valeur seuil de déclenchement pour une situation de circulation critique pour la dynamique transversale est adaptée en fonction d'une accélération du véhicule automobile.

2. Véhicule automobile selon la revendication 1, **caractérisé en ce que** la valeur seuil de déclenchement pour une situation de circulation critique pour la dynamique transversale est adaptée en fonction d'une vitesse du véhicule automobile.

3. Véhicule automobile selon la revendication 2, **caractérisé en ce que** l'accélération du véhicule est une accélération totale du véhicule automobile qui est composée de valeurs d'accélération transversale et longitudinale mesurées au moyen de capteurs (14, 15).

4. Véhicule automobile selon la revendication 3, **caractérisé en ce qu'**en cas de vitesses de véhicule automobile peu élevées et de faibles accélérations totales de véhicule automobile la valeur seuil de déclenchement accepte une valeur plus élevée que celles en cas de vitesses de véhicule automobile élevées et d'accélérations totales de véhicule automobile.

5. Véhicule automobile selon l'une quelconque des revendications 1 à 3, **caractérisé en ce que** la valeur seuil de déclenchement s'adapte au moins essentiellement de manière continue.

6. Véhicule automobile selon la revendication 5, **caractérisé en ce que** la valeur seuil de déclenchement est réduite jusqu'à 50 % lorsque la vitesse du véhicule automobile augmente et / ou lorsque l'accélération totale du véhicule automobile s'accroît.

7. Véhicule automobile équipé d'un système de sécurité (2) à action préventive de manière préventive par rapport à un risque de collision, qui comprend des dispositifs de sécurité (17), qui sont commandés en fonction d'informations lesquelles sont enregistrées au moyen d'un capteur de condition de circulation (6) par un dispositif d'enregistrement de situation de circulation (5) et analysées dans un dispositif d'analyse de données (16), les informations enregistrées étant comparées à une valeur seuil de déclenchement et une commande des dispositifs de sécurité étant déclenchée lorsque la valeur seuil de déclenchement est dépassée, **caractérisé en ce que** la valeur seuil de déclenchement pour une situation de circulation critique pour la dynamique transversale est réduite jusqu'à 50 % lorsque la vitesse du véhicule automobile augmente.
